# EUROPEAN PATENT SPECIFICATION

(11) **EP 2 650 409 B1**
(45) Date of publication and mention of the grant of the patent: **10.06.2015**
(21) Application number: 11846331.4
(22) Date of filing: 27.04.2011
(51) Int. Cl.: D01D 5/00, D01D 4/00, D01D 13/00, B82Y 40/00, D01D 13/02

(54) **FIELD EMISSION DEVICE AND NANOFIBER MANUFACTURING DEVICE**
FELDEMISSIONSVORRICHTUNG UND NANOFASERHERSTELLUNGSVORRICHTUNG
DISPOSITIF À ÉMISSION DE CHAMP ET DISPOSITIF DE FABRICATION DE NANOFIBRES

(30) Priority: 06.12.2010 JP 2010272071; 24.02.2011 KR 20110016676
(43) Date of publication of application: 16.10.2013
(73) Proprietor: Toptec Co., Ltd., Gumi-shi, Gyeonbuk 730-853 (KR); Shinshu University, Matsumoto-shi, Nagano 390-8621 (JP)
(72) Inventor: LEE, Jae Hwan, Gumi-si Gyeongsangbuk-do 730-853 (KR); KIM, Ick Soo, Ueda-shi Nagano 386-8567 (JP)
(74) Representative: Stolmár & Partner Patentanwälte PartG mbB
(86) International application number: PCT/KR2011/003056
(87) International publication number: WO 2012/077865

(56) References cited:
- EP-A2- 1 990 448
- JP-A- 2008 519 175
- JP-A- 2009 052 163
- KR-A- 20070 026 744
- KR-A- 20070 047 282
- US-A1- 2006 024 399

## Description

### Technical Field

The present invention relates to a field emission device and a nanofiber manufacturing device.

### Background Art

A field emission device which conducts field emission in such a way as to apply high voltage to a collector while a nozzle block is grounded was proposed in Japanese Patent laid-open Publication No. 2008-506864 (hereinafter, referred to as "Patent document 1").

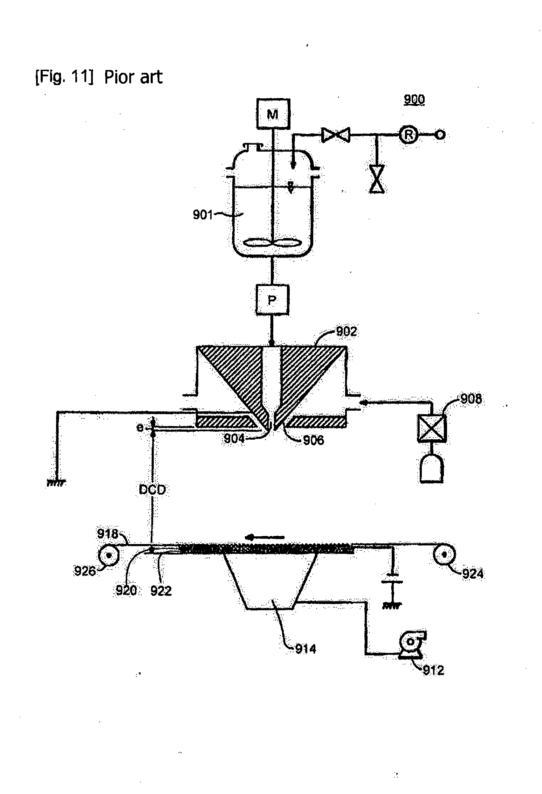

Fig. 11 is a view illustrating a field emission device 900 disclosed in Patent document 1. As shown in Fig. 11, the field emission device 900 proposed in Patent document 1 includes: a material tank 901 which stores a polymer solution therein; a nozzle block 902 which includes a solution discharge nozzle 904 that discharges a polymer solution, and a gas nozzle which forms the flow of gas; a collector 920 which is made of a conductive element; and a feed roll 924 and a winding roll 926 which are used to transfer a long sheet 918. In Fig. 11, reference numeral 912 denotes a suction blower, 914 denotes a gas collection pipe, and 922 denotes a support.

In the field emission device 900 disclosed in Patent document 1, negative high voltage is applied to the collector 920 and, simultaneously, the solution discharge nozzle 904 discharges a polymer solution while the nozzle block 902 is grounded, thus forming nanofibers on the long sheet, which is being transferred, through field emission.

According to the field emission device 900 disclosed in Patent document 1, all of the nozzle block 902, the ┌polymer solution before being discharged from the solution discharge nozzle 904┘, ┌the material tank 901 for storing the polymer solution┘ and ┌a polymer solution transfer unit (for example, a pipe and a pump) for transferring the polymer solution from the material tank 901 to the nozzle block 902┘ become ground potentials. Therefore, it is unnecessary for the material tank 901 or the polymer solution transfer unit to have high resistance against voltage. As a result, a problem of the structure of the field emission device being complicated, which may occur if the material tank 901 or the polymer solution transfer unit is required to have a high voltage-resistance structure, can be fundamentally prevented.

Furthermore, in the field emission device 900 disclosed in Patent document 1, high voltage is applied to the collector 920 capable of having a comparatively simple shape and structure, and the nozzle block 902, which has a comparatively complex shape and structure, is grounded. Under these conditions, field emission is conducted. Therefore, undesirable voltage discharge or drop can be prevented from occurring, whereby the field emission can be conducted continuously under stable conditions.

### Disclosure

### Technical Problem

However, in the field emission device 900 disclosed in Patent document 1, comparatively large electrostatic attractive force is generated between the collector and the long sheet due to high voltage applied to the collector. Thereby, the long sheet is pulled towards the collector, whereby the transfer of the long sheet may be impeded. Therefore, uniform conditions cannot be maintained for a long period of time during the process of forming nanofibers through field emission. In a severe case, the operation of the field emission device may have to be interrupted. As a result, it becomes very difficult to mass-produce, with high productivity, nanofibers having uniform quality (for example, related to an average diameter of nanofibers, diameter distribution of nanofibers, the amount of deposition of nanofibers, the meshes of a nanofiber layer, the thickness of the nanofiber layer, the gas permeability of the nanofiber layer, etc.).

Accordingly, the present invention has been made keeping in mind the above problems occurring in the prior art, and an object of the present invention is to provide a field emission device and a nanofiber manufacturing device which make it possible to reliably mass-produce nanofibers having satisfactory quality, even if field emission is conducted in such a way that high voltage is applied to a collector while a nozzle block is grounded.

### Technical Solution

In order to accomplish the above object, in an aspect, the present invention provides a field emission device, including a collector, a nozzle block disposed facing the collector, the nozzle block being provided with a plurality of nozzles discharging a polymer solution, and a power supply applying high voltage between the collector and the nozzle block, wherein one of a positive electrode and a negative electrode of the power supply is connected to the collector, while a remaining one of the positive electrode and the negative electrode of the power supply is connected to the nozzle block and a potential of the remaining one drops to a ground potential. The field emission device forms, through field emission, nanofibers on a long sheet that is being transferred at a predetermined transfer speed. The field emission device further includes an auxiliary belt device, having: an auxiliary belt comprising an insulating and porous endless belt rotatably provided in such a way as to encircle the collector; and an auxiliary belt drive unit rotating the auxiliary belt at the transfer speed of the long sheet.

In the field emission device according to the present invention, preferably, the auxiliary belt is made of a polymer substrate that has a thickness ranging from 0.7 mm to 10.0 mm. The polymer substrates may be made of polyamide such as polyethylene, polyacetylene, polyurethane, polypropylene, nylon, etc., polyacetal, polycarbonate, modified polyphenylene ether, polybutyleneterephtalate, polyethylene terephthalate, amorphous polyallylate, polysulfone, polyethersulfone, polyphenylene sulfide, polyether ether keton, polyimid, poly ethyl imide, fluorine resin, liquid crystal polymer, and so on. A plurality of openings, each of which has an area ranging from 0.001 mm² to 1.0 mm², are preferably formed in the auxiliary belt.

In the field emission device according to the present invention, the auxiliary belt drive unit may include a plurality of auxiliary belt rollers around which the auxiliary belt is wrapped so that the auxiliary belt is rotated by the auxiliary belt rollers, and a drive motor rotating at least one of the auxiliary belt rollers.

In the field emission device according to the present invention, the auxiliary belt drive unit may further include an auxiliary belt position control device controlling a position of an end of one of auxiliary belt rollers with respect to with respect to a direction from an inside of the auxiliary belt towards an outside thereof, thus controlling a position of the auxiliary belt with respect to a longitudinal direction of the auxiliary belt roller.

In the field emission device according to the present invention, the auxiliary belt position control device may include: a pair of air springs disposed on opposite sides of a support shaft, the support shaft rotatably supporting the end of the auxiliary belt roller; and an expansion-rate control unit independently controlling expansion rates of the air springs.

In the field emission device according to the present invention, the auxiliary belt drive unit may further include an auxiliary belt position sensor measuring the position of the auxiliary belt with respect to the longitudinal direction of the auxiliary belt roller and control the position of the auxiliary belt with respect to the longitudinal direction of the auxiliary belt roller based on a result of measurement of the auxiliary belt position sensor.

In the field emission device according to the present invention, the auxiliary belt drive unit may further include a tension control device controlling a position of at least one of the auxiliary belt rollers with respect to the direction from the inside of the auxiliary belt towards the outside thereof, thus controlling tension applied to the auxiliary belt.

In the field emission device according to the present invention, the tension control device may control a position of the auxiliary belt roller with respect to the direction from the inside of the auxiliary belt towards the outside thereof in such a way that the auxiliary belt roller is moved to a position at which the auxiliary belt can be easily wrapped around the auxiliary belt rollers or can be easily removed therefrom.

In the field emission device according to the present invention, a width of the auxiliary belt may be greater than a width of the collector that corresponds to a width of the long sheet.

In the field emission device according to the present invention, an opening ratio of the auxiliary belt may range from 1% to 40%.

In the field emission device according to the present invention, the auxiliary belt may include a net-shaped substrate formed by weaving threads having diameters ranging from 0.1 mm to 2.0 mm.

In the field emission device according to the present invention, the net-shaped substrate may comprise a plurality of net-shaped substrates, and the auxiliary belt may be configured such that the net-shaped substrates are stacked on top of one another.

In another aspect, the present invention provides a nanofiber manufacturing device, including: a transfer device transferring a long sheet at a predetermined transfer speed; and the field emission device depositing nanofibers on the long sheet that is being transferred by the transfer device.

In the nanofiber manufacturing device according to the present invention, the field emission device may comprise a plurality of field emission devices arranged in series in a direction in which the long sheet is transferred.

In the nanofiber manufacturing device according to the present invention, the auxiliary belt device may include: one or a plurality of auxiliary belts provided in such a way as to encircle the collectors of two through all of the field emission devices; and an auxiliary belt drive unit rotating the one or the plurality of auxiliary belts at a speed corresponding to the transfer speed of the long sheet.

### Advantageous Effects

A field emission device according to the present invention is provided with a power supply, one electrode of which is connected to a collector while the other electrode is connected to a nozzle block in such a way that the potential of the electrode connected to the nozzle block drops to the ground potential. Thus, all of the nozzle block, ┌polymer solution before being discharged from nozzles┘ ┌a material tank for storing the polymer solution┘ and ┌a polymer solution transfer unit (for example, a pipe and a pump) for transferring the polymer solution from the material tank to the nozzles┘ become ground potentials. Therefore, in the same manner as the case of the field emission device disclosed in Patent document 1, it is unnecessary for the material tank or the polymer solution transfer unit to have high resistance against voltage. As a result, the present invention can prevent a problem of the structure of the field emission device being complicated, which may occur if the material tank or the polymer solution transfer unit is configured to have high resistance against voltage.

Because the field emission device according to the present invention is provided with the power supply, one electrode of which is connected to the collector while the other electrode is connected to the nozzle block 110 in such a way that the potential of the electrode connected to the nozzle block 110 drops to the ground potential, field emission is conducted under conditions, in which high voltage is applied to the collector capable of having a comparatively simple shape and structure, and the nozzle block, which has a comparatively complex shape and structure, is grounded, in the same manner as the case of the field emission device disclosed in Patent document 1. Therefore, undesirable voltage discharge or drop can be prevented from occurring, whereby the field emission can be conducted continuously under stable conditions.

In addition, the field emission device according to the present invention is also provided with an auxiliary belt device, which includes an auxiliary belt which is rotatably provided in such a way as to encircle the collector and is made of an insulating and porous endless belt, and an auxiliary belt drive unit which rotates the auxiliary belt at a speed corresponding to the speed at which the long sheet is transferred. Accordingly, even if comparatively large electrostatic attractive force occurs between the collector and the long sheet, because the auxiliary belt is present between the long sheet and the collector, the long sheet W can be reliably prevented from being pulled towards the collector, or the long sheet can be smoothly transferred without being impeded. As a result, it is possible that nanofibers are formed under uniform conditions through field emission, and the field emission device can be continuously operated without being interrupted. Thereby, nanofibers having uniform quality (for example, an average diameter of nanofibers, diameter distribution of nanofibers, the amount of deposition of nanofibers, the thickness of nanofiber nonwoven fabric, gas permeability of nanofiber nonwoven fabric, etc.) can be mass- produced with high productivity.

Furthermore, in the field emission device according to the present invention, since the auxiliary belt rotates at a speed corresponding to the transfer speed of the long sheet, there is no problem of the auxiliary belt of having a bad influence on the transfer of the long sheet. Moreover, in the field emission device of the present invention, the auxiliary belt is an insulating and porous endless belt, thus not affecting electric field distribution between the collector and the nozzle block.

Moreover, in the field emission device according to the present invention, the auxiliary belt drive unit includes a plurality of auxiliary belt rollers which rotate the auxiliary belt wrapped around them, and a drive motor which rotates at least one of the auxiliary belt rollers. Therefore, the auxiliary belt can be reliably rotated at a speed corresponding to the transfer speed of the long sheet.

Meanwhile, in the field emission device according to the present invention, the auxiliary belt drive unit further includes an auxiliary belt position control device which controls the position of an end of one of the auxiliary belt rollers with respect to a direction from the inside of the auxiliary belt towards the outside thereof so that the position of the auxiliary belt with respect to the longitudinal direction of the auxiliary belt roller can be controlled. As such, the inclination of the auxiliary belt roller can be controlled, and this makes it possible to maintain the position of the auxiliary belt with respect to the longitudinal direction of the auxiliary belt roller within an appropriate range over a long period of time.

In the field emission device according to the present invention, the auxiliary belt position control device includes a pair of air springs which are disposed on opposite sides of a support shaft that is coupled to one end of the corresponding auxiliary belt roller and rotatably supports it, and an expansion-rate control unit which independently controls the expansion rate of each air spring. Therefore, the auxiliary belt position control device can smoothly control the position of the auxiliary belt with respect to the longitudinal direction of the auxiliary belt roller.

Furthermore, in the field emission device according to the present invention, the auxiliary belt drive unit includes an auxiliary belt position sensor which measures the position of the auxiliary belt with respect to the longitudinal direction of the auxiliary belt roller. Based on the result of the measurement of the auxiliary belt position sensor, the position of the auxiliary belt with respect to the longitudinal direction of the auxiliary belt roller is controlled. Therefore, the position of the auxiliary belt with respect to the longitudinal direction of the auxiliary belt roller can be more precisely and reliably controlled.

Meanwhile, in the field emission device according to the present invention, the auxiliary belt drive unit further includes a tension control device which adjusts the position of the auxiliary belt roller with respect to the direction from the inside of the auxiliary belt towards the outside thereof and thus controls the tension applied to the auxiliary belt. Hence, even if comparatively large electrostatic attractive force occurs between the collector and the auxiliary belt, because it is possible for the tension of the auxiliary belt to be adjusted to a degree to overcome the electrostatic attractive force, not only can the long sheet be prevented from being pulled towards the collector, but the transfer of the long sheet can also be reliably prevented from being impeded.

Moreover, in the field emission device according to the present invention, the tension control device can adjust the position of the corresponding auxiliary belt roller with respect to the direction from the inside of the auxiliary belt towards the outside thereof in such a way that the auxiliary belt roller is moved to a position at which the auxiliary belt can be easily wrapped around the auxiliary belt rollers or can be easily removed therefrom. Therefore, the operation of wrapping the auxiliary belt around the auxiliary belt rollers or removing it therefrom can be facilitated.

In the field emission device according to the present invention, the width of the auxiliary belt is greater than that of the collector that corresponds to the width of the long sheet. Thus, the auxiliary belt is reliably disposed between the long sheet and the collector, whereby the long sheet can be prevented from being pulled towards the collector, or the long sheet can be smoothly transferred without being impeded.

In addition, in the field emission device of the present invention, the opening ratio of the auxiliary belt ranges from 1% to 40%. The reason for this is due to the fact that, when the opening ratio of the auxiliary belt is 1% or more, it does not greatly influence electro field distribution formed between the collector and the nozzle block, and when the opening ratio of the auxiliary belt is 40% or less, it does not greatly reduce the mechanical strength of the auxiliary belt.

In the field emission device according to the present invention, because the auxiliary belt is made of net-shaped substrates which are formed by weaving threads of 0.1 mm to 2.0 mm in diameter, the auxiliary belt has both high mechanical strength and flexibility. Therefore, the auxiliary belt can be smoothly rotated with strong tension applied thereto.

Furthermore, in the field emission device according to the present invention, because the auxiliary belt is configured in such a way that net-shaped substrates are stacked on top of one another, the auxiliary belt has sufficient mechanical strength, thus making it possible to rotate the auxiliary belt with increased tension.

In this case, it is preferable that the net-shaped substrates which are stacked on top of one another to form the auxiliary belt are made of different kinds of materials. Thereby, the mechanical strength and durability of the auxiliary belt can be further enhanced. For instance, a substrate formed on a surface of the auxiliary belt that faces the long sheet may be made of soft material, and a substrate formed on a surface of the auxiliary belt that faces the collector may be made of material having high mechanical strength. The stacked structure of the net-shaped substrates may be a two-, three-, four- or more-layer structure, or it may be a 2.5-layer structure. The term ┌2.5-layer structure┘ refers to a structure such that the thread density of one layer of the two-layer structure is higher than that of the other layer so that the surface planarity and the abrasion resistance of the auxiliary belt can be enhanced without increasing the weight thereof.

Meanwhile, a nanofiber manufacturing device according to the present invention uses the field emission device having the above-mentioned construction. Therefore, even if field emission is conducted in such a way that high voltage is applied to the collector while the nozzle block is grounded, the nanofiber manufacturing device can mass-produce nanofibers having uniform quality with high productivity.

Furthermore, the nanofiber manufacturing device according to the present invention includes several field emission devices. Because the several field emission devices are used to manufacture nanofibers, the nanofiber manufacturing device can mass-produce nanofibers with further enhanced productivity.

Moreover, the nanofiber manufacturing device according to the present invention may be configured such that one or more auxiliary belt devices are provided, and one or each auxiliary belt device includes an auxiliary belt which is wrapped around two or more collectors of the field emission devices, and an auxiliary belt drive unit which rotates the auxiliary belt at a speed corresponding to the transfer speed of the long sheet. In this case, the number of the auxiliary belt drive units can be reduced. For example, in the case of the nanofiber manufacturing device that is provided with eight field emission devices, a single auxiliary belt device may be installed for every two field emission devices. Alternatively, a single auxiliary belt device may be installed for every four field emission devices. As a further alternative, a single auxiliary belt device may be installed for all of eight field emission devices.

The field emission device or the nanofiber manufacturing device according to the present invention can manufacture different kinds of nanofilbers for various purposes of use, for example, medical supplies such as highly functional and highly sensitive textiles, health and beauty related products such as health or skin care products, industrial material such as cloths, filters, etc., electronic-mechanical material such as separators for secondary batteries, separators for condensers, carriers for different kinds of catalysts, material for a variety of sensors, and medical material such as regenerative medical material, bio-medical material, medical MEMS material, biosensor material, etc.

### Description of Drawings

Fig. 1 is a view illustrating a nanofiber manufacturing device according to a first embodiment of the present invention.
Fig. 2 illustrates a critical portion of a field emission device.
Fig. 3 is a view illustrating an auxiliary belt.
Fig. 4 is a view showing the operation of an auxiliary belt position control device.
Fig. 5 illustrates the operation of the auxiliary belt position control device.
Fig. 6 illustrates the operation of a tension control device.
Fig. 7 illustrates a modification of the auxiliary belt.
Fig. 8 is a view showing a modification of the auxiliary belt position control device.
Fig. 9 is a view showing a modification of an auxiliary belt position sensor.
Fig. 10 is a front view showing a critical portion of the field emission device.
Fig. 11 is a view illustrating a field emission device proposed in Patent document 1.

### Best Mode

Hereinafter, a field emission device and a nanofiber manufacturing device according to an embodiment of the present invention will be described with reference to the attached drawings.

### [Embodiment]

### 1. Construction of a nanofiber manufacturing device 1 according to an embodiment

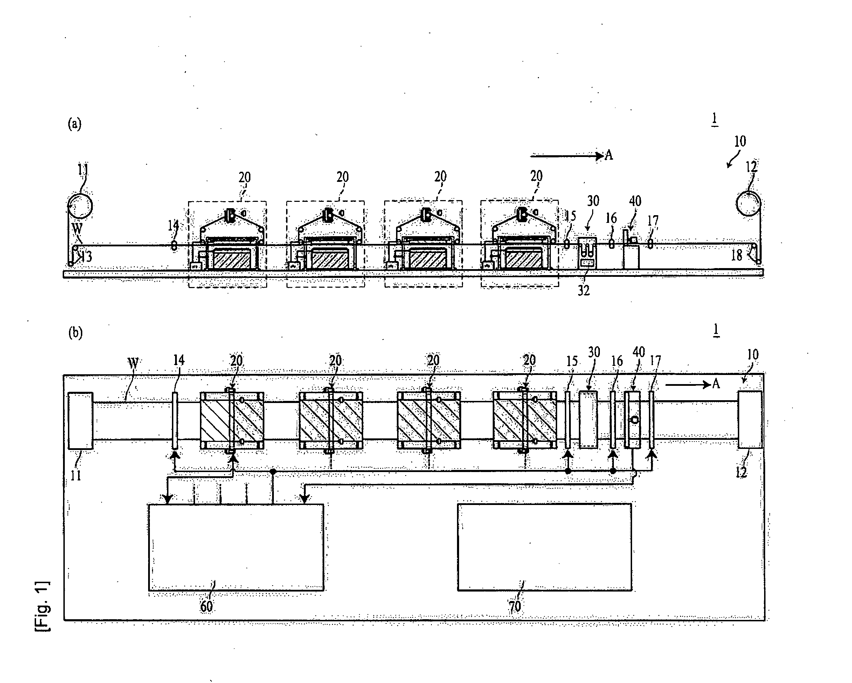

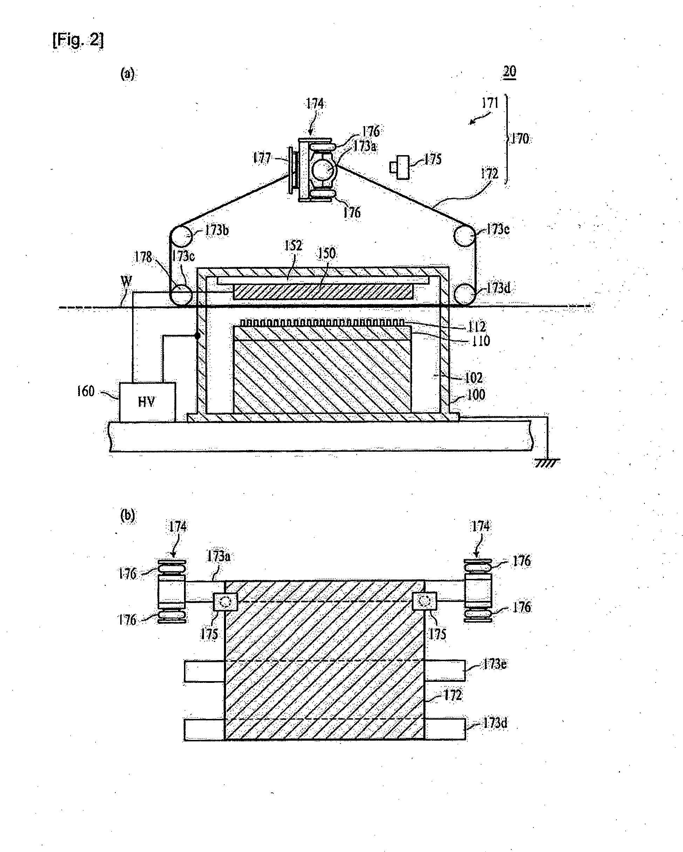

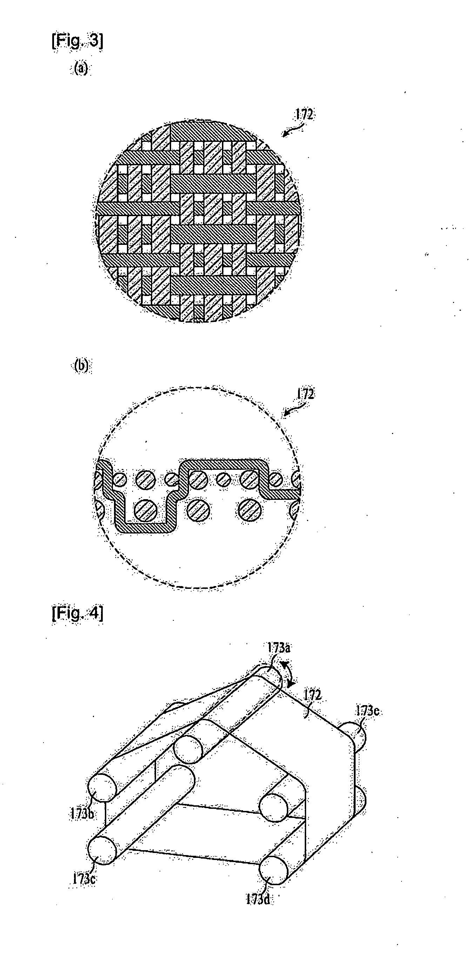

Fig. 1 is a view illustrating the nanofiber manufacturing device 1 according to the embodiment of the present invention. Fig. 1a is a front view of the nanofiber manufacturing device 1, and Fig. 1b is a plan view of the nanofiber manufacturing device 1. Fig. 2 illustrates a critical portion of a field emission device. Fig. 2a is a front view of the critical portion of the field emission device. Fig. 2b is a view showing an auxiliary belt device from a direction in which a long sheet is transferred. Fig. 3 is a view illustrating an auxiliary belt. Fig. 3a is an enlarged plan view of the auxiliary belt, and Fig. 3b is an enlarged sectional view of the auxiliary belt. In Figs. 1 and 2, a polymer solution supply unit and a polymer solution collection unit are not designated. Also, Fig. 1a illustrates some parts as sectional views. In Fig. 3, warp threads and weft threads are indicated by hatching.

As shown in Fig. 1, the nanofiber manufacturing device 1 according to the embodiment of the present invention includes a transfer device 10 which transfers a long sheet W at a predetermined transfer speed V, a plurality of field emission devices 20 which are arranged in series with respect to a transfer direction A in which the long sheet W is transferred by the transfer device 10, a gas permeability measurement device 40, and a main controller 60. The main controller 60 controls the transfer device 10, the field emission device 20, a heating device 30 which will be explained later herein, the gas permeability measurement device 40, a VOC treatment device 70 which will be explained later herein, an inert gas supply device (not shown), a polymer supply device (not shown) and a polymer collection device (not shown).

In the nanofiber manufacturing device 1 according to this embodiment, four field emission devices 20 are arranged in series in the transfer direction A in which the long sheet W is transferred.

The nanofiber manufacturing device 1 according to this embodiment further includes the heating device 30 which is disposed between the field emission device 20 and the gas permeability measurement device 40 and heats the long sheet W on which nanofibers are deposited, the VOC treatment device 70 which burns volatile components generated when nanofibers are deposited on the long sheet W and eliminates them, and the inert gas supply device which receives a signal from the main controller 60 and supplies inert gas into a field emission chamber 102 of a field emission device 20 that is detected to be abnormal.

As shown in Fig. 1, the transfer device 10 includes a feed roller 11 which supplies the long sheet W, a winding roller 12 around which the long sheet W is wound, and auxiliary rollers 13 and 18 and drive rollers 14, 15, 16 and 17 which are disposed between the feed roller 11 and the winding roller 12. The feed roller 11, the winding roller 12 and the drive roller 14, 15, 16 and 17 are configured to be rotated by a drive motor which is not shown in the drawings.

As shown in Fig. 2, the field emission device 20 includes a casing 100 which is conductive, a collector 150 which is attached to the casing 100 with an insulator 152 interposed therebetween, a nozzle block 110 which is disposed facing the collector 150 and is provided with a plurality of nozzles 112 to discharge polymer solution, a power supply 160 which applies high voltage (e.g., 10 kV to 80 kV) between the collector 150 and the nozzle block 110, a field emission chamber 102 which is a space that covers the collector 150 and the nozzle block 110, and an auxiliary belt device 170 which assists in transferring the long sheet W.

As shown in Fig. 2, the nozzle block 110 includes, as the nozzles 112, a plurality of upward nozzles 112 which discharges a polymer solution from outlets thereof upwards. The nanofiber manufacturing device 1 is configured such that the polymer solution is discharged from the outlets of the upward nozzles 112 in such a way as to overflow from the outlets of the upward nozzles 112, thus forming nanofibers through field-emission and, simultaneously, the polymer solution that has overflowed from the outlets of the upward nozzles 112 is collected so that it can be reused as material for nanofibers. The upward nozzles 112 are arranged at intervals, for example, of 1.5 cm to 6.0 cm. The number of upward nozzles 112 is, for example, 36 (6 by 6, when the same in length and width) - 21904 (148 by 148). The nozzle block 110 may be directly grounded or, alternatively, it may be grounded through the casing 100. In the field emission device according to the present invention, various sizes and shapes of nozzle blocks can be used, and the nozzle block 110 preferably has a rectangular shape (including a square shape), one side of which ranges from 0.5 m to 3 m, when viewed as the plan view.

The power supply 160 includes a current supply unit, a current measurement unit which measures current supplied from the current supply unit, and a control unit which controls the operation of the current supply unit and processes the result of current measurement of current measurement unit. Furthermore, the power supply 160 applies high voltage between the collector 150 and the nozzles 112, measures current supplied from the power supply 160, and transmits a measured value to the main controller 60. When the power supply 160 receives a current interruption signal from the main controller 60, power supply is interrupted.

As shown in Fig. 2, the auxiliary belt device 170 includes an auxiliary belt 172 which is rotatably provided in such a way as to encircle the collector 150 and is made of an insulating and porous endless belt, and an auxiliary belt drive unit 171 which rotates the auxiliary belt 172 at a speed corresponding to the speed at which the long sheet W is transferred.

As shown in Figs. 2 or 3, the auxiliary belt 172 is configured in such a way that net-shaped substrates, each of which is fabricated by weaving threads having diameters of 0.1 mm to 2.0 mm, are stacked on top of one another. The auxiliary belt 172 has an opening ratio ranging from 1% to 40%, and the width thereof is greater than that of the collector 150 that corresponds to the width of the long sheet W. In detail, for example, a first layer net, in which polyethylene threads, the diameters of which are 0.27 mm and 0.18 mm, are alternately arranged, and a second layer net, in which polyacetylene threads of 0.35 mm in diameter and polyethylene threads of 0.35 mm in diameter are alternately arranged, are weaved with polyethylene warp threads of 0.25 mm in diameter, thus forming a net-shaped substrate (refer to Fig. 3a). Net-shaped substrates are stacked on top of one another, thus forming a belt having a 2.5-layer structure (refer to Fig. 3b). The width of the auxiliary belt 172 is 2 m, and a plurality of holes are formed in the auxiliary belt 172 such that the opening ratio thereof is 4%. The peripheral length of the auxiliary belt is preferably 6 m, although it is changed depending on the length of the collector 150.

As shown in Fig. 2, the auxiliary belt drive unit 171 includes five auxiliary belt rollers 173a, 173b, 173c, 173d and 173e (hereinafter, also denoted by 173) around which the auxiliary belt is wrapped so that the auxiliary belt is rotated by the auxiliary belt rollers, a drive motor (not shown) which rotates the auxiliary belt rollers 173, an auxiliary belt position control device 174 which controls the position of the auxiliary belt 172 with respect to the longitudinal direction of the auxiliary belt roller 173a, an auxiliary belt position sensor 175 which measures the position of the auxiliary belt 172 with respect to the longitudinal direction of the auxiliary belt roller 173a, and a tension control device 178 which controls the tension applied to the auxiliary belt 172.

Each of the auxiliary belt rollers 173 which rotate the auxiliary belt 172 has a length of 2.2 m with respect to the transverse direction of the auxiliary belt 172. The auxiliary belt roller 173a receives a signal from the auxiliary belt position control device 174 so that one end of the auxiliary belt roller 173a is controlled in position with respect to the direction from the inside of the auxiliary belt 172 towards the outside thereof. The auxiliary belt roller 173c receives a signal from the tension control device 178 and is controlled in position with respect to the direction from the inside of the auxiliary belt 172 towards the outside thereof. The auxiliary belt roller 173d is rotated by the drive motor (not shown).

In other words, the auxiliary belt roller 173d is a drive roller, and the other auxiliary belt rollers are driven rollers. The field emission device of the present invention may have two or more drive rollers.

The auxiliary belt position control device 174 includes a pair of air springs 176 and an expansion-rate control unit 177. The air springs 176 are disposed on opposite upper and lower sides of a support shaft, which is coupled to one end of the auxiliary belt roller 173a and rotatably supports it. The expansion-rate control unit 177 independently controls the expansion rate of each air spring 176.

Based on the result of measurement of the auxiliary belt position sensor 175, the expansion-rate control unit 177 transmits a signal to control the expansion-rates of the air springs 176 so that one end of the auxiliary belt roller 173a moves upwards or downwards whereby the auxiliary belt roller 173a is tilted and the auxiliary belt is moved to a predetermined position in the transverse direction of the long sheet W.

The air springs 176 function to move the one end of the auxiliary belt roller 173a upwards or downwards and tilt the auxiliary belt roller 173a. For example, if the lower air spring is expanded while the upper air spring is contracted, the one end of the auxiliary belt roller 173a is moved upwards so that the auxiliary belt roller 173a is tilted in a corresponding direction. If the lower air spring is contracted while the upper air spring is expanded, the support shaft side of the auxiliary belt roller 173a is moved downwards so that the auxiliary belt roller 173a is tilted in the other direction. A typical air spring can be used as each air spring 176.

The auxiliary belt position sensor 175 is a position sensor which measures the position of the auxiliary belt with respect to the transverse of the auxiliary belt 172. The auxiliary belt position sensor 175 transmits the result of measurement to the auxiliary belt position control device 174. A camera can be used as the position sensor.

The tension control device 178 controls the tension applied to the auxiliary belt 172 in such a way that the tension applied to the auxiliary belt is measured and, when necessary, the auxiliary belt roller 173c is moved by pneumatic pressure. Furthermore, the tension control device 178 is used to facilitate work of wrapping the auxiliary belt 172 around the auxiliary belt rollers 173 or removing it therefrom.

The field emission device 20 is installed in a room set at an ambient temperature ranging from 20°C to 40°C and an ambient humidity ranging from 20% to 60%.

The heating device 30 is disposed between the field emission device 20 and the gas permeability measurement device 40 and functions to heat the long sheet W on which nanofibers are deposited. Although the temperature to which the long sheet W is heated can be changed depending on the kind of long sheet W or nanofiber, it is preferable that the long sheet W is heated to a temperature ranging from 50°C to 300°C.

The gas permeability measurement unit 40 measures the gas permeability of the long sheet W on which nanofibers are deposited by the field emission devices 20.

The main controller 60 controls the transfer device 10, the field emission devices 20, the heating device 30, the gas permeability measurement device 40, the VOC treatment device 70, the inert gas supply device, the polymer supply device and the polymer collection device.

The VOC treatment device 70functions to burn volatile components generated when nanofibers are deposited on the long sheet, thus eliminating them.

### 2. A method of manufacturing nanofibers using the nanofiber manufacturing device according to an embodiment

Hereinafter, a method of manufacturing nanofiber nonwoven fabric using the nanofiber manufacturing device 1 having the above-mentioned construction will be described.

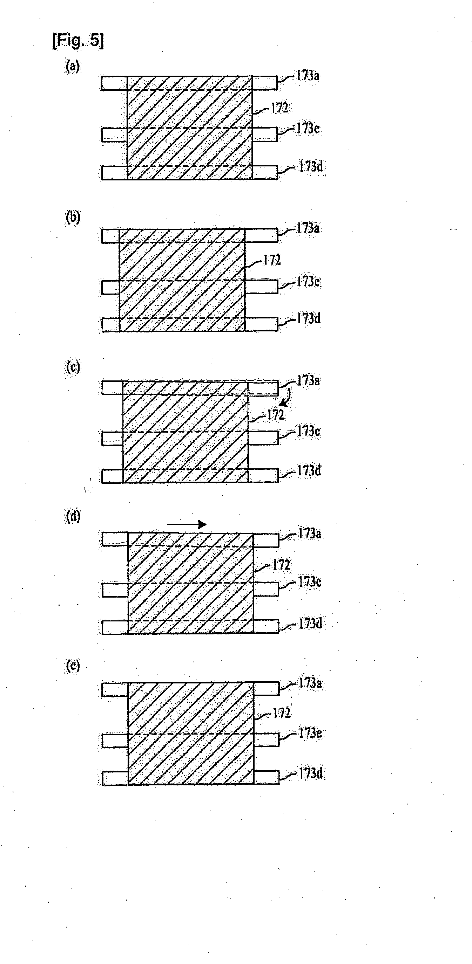

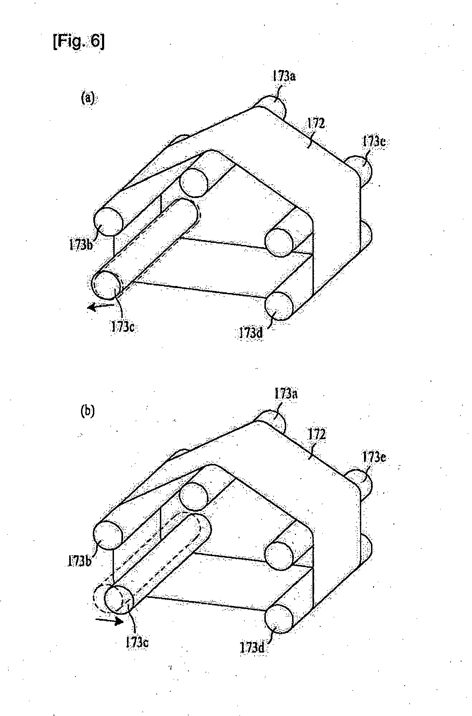

Fig. 4 is a view illustrating an auxiliary belt position control device 174. Fig. 5 illustrates the operation of the auxiliary belt position control device 174. Fig. 5a through 5e are process views. Fig. 6 is a view illustrating a tension control device 178. Fig. 6a is a view illustrating the operation of the tension control device 178 when operation of controlling the tension applied to the auxiliary belt 172 is conducted. Fig. 6b is a view illustrating the operation of the tension control device 178 when operation of removing the auxiliary belt 172 from the auxiliary belt rollers is conducted. In Figs. 4 through 6, to simplify the drawings, illustration of elements, other than the auxiliary belt 172 and the auxiliary belt rollers 173, is omitted.

First, the long sheet W is set on the transfer device 10. Thereafter, while the long sheet W is transferred from the feed roller 11 to the winding roller 12 at a predetermined transfer speed V, the field emission devices 20 successively deposit nanofibers on the long sheet W. Subsequently, the heating device 30 heats the long sheet W on which nanofibers have been deposited. In this way, nanofiber nonwoven fabric including the long sheet on which nanofibers are deposited is manufactured.

During this process, the auxiliary belt device 170 rotates the auxiliary belt 172 at a speed corresponding to a speed, at which the long sheet W is transferred, uses the auxiliary belt position sensor 175 to measure the position of the auxiliary belt 172 with respect to the longitudinal direction of the auxiliary belt roller 173a, and uses the tension control device 178 to measure the tension applied to the auxiliary belt 172.

If the auxiliary belt position sensor 175 detects that the auxiliary belt 172 has been dislocated from a correct position with respect to the longitudinal direction of the auxiliary belt roller 173a, the auxiliary belt position control device 174 moves the one end of the auxiliary belt roller 173a upwards or downwards, as shown in Fig. 4, thus controlling the position of the auxiliary belt 172 with respect to the longitudinal direction of the auxiliary belt roller 173a such that it is located at the correct position.

For example, if the auxiliary belt is moved in the left-right direction and displaced from its original position (refer to Figs. 5a and 5b), the auxiliary belt position sensor 175 transmits the result of position measurement to the auxiliary belt position control device 174. Then, the auxiliary belt position control device 174 calculates a displacement to move the end (in this embodiment, the right end) of the auxiliary belt roller 173a downwards and controls the air springs 176 based on the calculated displacement in such a way as to adjust the expansion rates of the air springs 176 (refer to Fig. 5c).

As a result, the auxiliary belt 172 is moved to the right with respect to the ground (Fig. 5d) and is eventually returned to the correct position (Fig. 5e).

Meanwhile, if the tension control device detects that the tension applied to the auxiliary belt 172 has been reduced, loosening the auxiliary belt 172, as shown in Fig. 6a, the auxiliary belt roller 173c is moved outwards with respect to the direction from the inside of the auxiliary belt 172 towards the outside thereof, thus returning the tension of the auxiliary belt to a predetermined value.

As shown in Fig. 6b, to wrap the auxiliary belt 172 around the auxiliary belt rollers 173 before field emission begins or remove the auxiliary belt 172 from the auxiliary belt roller 173 after the field emission has finished, the auxiliary belt roller 173c is moved inwards (in the direction from the inside of the auxiliary belt 172 towards the outside thereof) to a position at which the auxiliary belt wrapping or removal operation can be facilitated.

The main controller 60 controls the transfer speed V, at which the transfer device 10 transfers the long sheet W, based on a gas permeability measured by the gas permeability measurement device 40 or an average gas permeability. For example, if field emission conditions are changed in such a way that the measured gas permeability becomes greater than a predetermined gas permeability, the main controller 60 reduces the transfer speed V such that the amount of cumulative nanofibers deposited on the long sheet per a unit area is increased, thus reducing the gas permeability. Furthermore, the main controller 60 also controls the auxiliary belt drive unit 171 so that the auxiliary belt 172 rotates at a speed corresponding to the controlled transfer speed of the long sheet W.

During the manufacturing process, when each field emission device carries out field emission while voltage, e.g., of 35kV, is applied between the collector 150 and the nozzle block 110, if it is detected that current supplied from one of the power supplies 160 or more than one power supply 160 is larger than 0.24 mA, the main controller 60 transmits a current interruption signal to the corresponding one or more power supplies 160.

Furthermore, when it is detected that current of less than 0.18 mA is supplied from one ore more power supplies 160, the main controller 60 generates an alarm (a warning sound or warning sign) to notify that the one or more power supplies 160 are abnormal.

Moreover, when a current interruption signal is transmitted to an associated one or more power supplies 160, the main controller 60 also transmits a transfer speed reduction signal to the transfer device 10 so as to maintain the amount of cumulative nanofibers deposited on the long sheet W per a unit area within a predetermined range.

Here, when the number of power supplies 160 that have supplied current for a first period before the transfer speed is reduced is ┌n┘ and the number of power supplies 160 that supply power for a second period after the transfer speed has been reduced is ┌m┘, the main controller 60 controls the transfer device such that the transfer speed for the second period is ┌m/n┘ times the transfer speed for the first period. Subsequently, the main controller 60 more finely controls the transfer speed based on the gas permeability measured by the gas permeability measurement device 40. Also, the main controller 60 controls the auxiliary belt drive unit 171 such that the auxiliary belt 172 is rotated at a speed corresponding to the transfer speed at which the long sheet W is transferred.

The control of the transfer speed V can be embodied by controlling the rpm of the drive rollers 14, 15, 16 and 17.

Hereinafter, field emission conditions in the nanofiber manufacturing method according to the present invention will be described by example.

Nonwoven fabric, cloth, knitted fabric, a film etc., which are made of different kinds of materials, can be used as the long sheet. Preferably, the thickness of the long sheet ranges from 5 µm to 500 µm, and the length thereof ranges from 10 m to 10 km.

Polylactic acid (PLA), polypropylene (PP), polyvinyl acetate (PVAc), polyethylene terephthalate (PET), polybutylene terephthalate (PBT), polyethylene naphthalate (PEN), polyamide PA, polyurethane (PUR), polyvinyl alcohol (PVA), polyacrylonitrile (PAN), polyether lmide (PEI), polycaprolactone (PCL), polylactic acid glycolic acid (PLGA), silk, cellulose, chitosan, etc. can be used as material of the polymer for nanofibers.

Dichloromethane, dimethylformaide, dimethyl sulfoxide, methyl ethyl ketone, chloroform, acetone, water, formic acid, acetic acid, cyclohexane, THF, etc. can be used as a solvent which is used for the polymer solution. A mixture of different kinds of solvents may be used, and an addition agent such as a conductivity improver may be added to the polymer solution.

The gas permeability P of nanofiber nonwoven fabric ranges from 0.15 cm³/cm²/s to 200 cm³/cm²/s. The transfer speed V is preferably set to a speed of 0.2 m/minute to 100 m/minute. The voltage which is applied to the nozzles, the collector 150 and the nozzle block 110 can be set to a voltage of 10 kV to 80 kV (in the field emission device 20 according to this embodiment, it is preferable for the voltage to be set to about 50 kV).

The temperature in the emission area is preferably set to 25°C, and the humidity in the emission area is set to 30%.

### 3. The effects of the field emission device and the manufacturing device according to the embodiment

The field emission device 20 according to the embodiment is provided with the power supply 160, one electrode of which is connected to the collector 150 while the other electrode is connected to the nozzle block 110 and the potential thereof drops to the ground potential. All of the nozzle block 110, ┌polymer solution before being discharged from the nozzles 112┘, ┌a material tank for storing the polymer solution┘ and ┌a polymer solution transfer unit (for example, a pipe and a pump) for transferring the polymer solution from the material tank to the nozzles 112┘ become ground potentials. Therefore, in the same manner as the case of the field emission device disclosed in Patent document 1, it is unnecessary for the material tank or the polymer solution transfer unit to have high resistance against voltage. As a result, the present invention can prevent a problem of the structure of the field emission device being complicated, which may occur if the material tank or the polymer solution transfer unit is configured to have high resistance against voltage.

Furthermore, because the field emission device 20 according to the embodiment is provided with the power supply 160, one electrode of which is connected to the collector 150 while the other electrode is connected to the nozzle block 110 and the potential thereof drops to the ground potential, field emission is conducted under conditions, in which high voltage is applied to the collector 150 capable of having a comparatively simple shape and structure, and the nozzle block 110, which has a comparatively complex shape and structure, is grounded, in the same manner as the case of the field emission device disclosed in Patent document 1. Therefore, undesirable voltage discharge or drop can be prevented from occurring, whereby the field emission can be conducted continuously under stable conditions.

In addition, the field emission device 20 according to the embodiment is also provided with the auxiliary belt device 170, which includes the auxiliary belt 172 which is rotatably provided in such a way as to encircle the collector 150 and is made of an insulating and porous endless belt, and an auxiliary belt drive unit 171 which rotates the auxiliary belt 172 at a speed corresponding to the speed at which the long sheet W is transferred. Accordingly, even if comparatively large electrostatic attractive force occurs between the collector 150 and the long sheet W, because the auxiliary belt 172 is present between the long sheet W and the collector 150, the long sheet W can be reliably prevented from being pulled towards the collector 150, or the long sheet W can be smoothly transferred without being impeded. As a result, it is possible that nanofibers are formed under uniform conditions through field emission, and the field emission device 1 can be continuously operated without being interrupted. Thereby, nanofibers having uniform quality (for example, an average diameter of nanofibers, diameter distribution of nanofibers, the amount of deposition of nanofibers, the thickness of nanofiber nonwoven fabric, gas permeability of nanofiber nonwoven fabric, etc.) can be mass-produced with high productivity.

Further, in the field emission device 20 according to the embodiment, since the auxiliary belt 172 rotates at a speed corresponding to the transfer speed of the long sheet W, there is no problem of the auxiliary belt 172 of having a bad influence on the transfer of the long sheet W. Moreover, in the field emission device 20 of the present invention, the auxiliary belt 172 is an insulating and porous endless belt, thus not affecting electric field distribution between the collector 150 and the nozzle block 110.

Also, in the field emission device 20 according to the embodiment of the present invention, the auxiliary belt drive unit 171 includes the several auxiliary belt rollers 173 which rotate the auxiliary belt 172 wrapped around them, and the drive motor which rotates the auxiliary belt roller 173c. Therefore, the auxiliary belt 172 can be reliably rotated at a speed that corresponds to the transfer speed of the long sheet W.

Furthermore, in the field emission device 20 according to the embodiment of the present invention, the auxiliary belt drive unit 171 includes an auxiliary belt position control device 174 which controls the position of one end of the auxiliary belt roller 173a with respect to the direction from the inside of the auxiliary belt 172 towards the outside thereof so that the position of the auxiliary belt 172 with respect to the longitudinal direction of the auxiliary belt roller 173a can be controlled. As such, the inclination of the auxiliary belt roller 173a can be controlled, and this makes it possible to maintain the position of the auxiliary belt 172 with respect to the longitudinal direction of the auxiliary belt roller 173a within an appropriate range over a long period of time.

Particularly, in the field emission device 20 according to the embodiment, the auxiliary belt position control device 174 includes the two air springs 176 which are disposed on opposite sides of the support shaft that is coupled to one end of the auxiliary belt roller 173a and rotatably supports it, and the expansion-rate control unit 177 which independently controls the expansion rate of each air spring 176. Therefore, the auxiliary belt position control device 174 can smoothly control the position of the auxiliary belt with respect to the longitudinal direction of the auxiliary belt roller.

Furthermore, in the field emission device 20 according to the embodiment, the auxiliary belt drive unit 171 includes the auxiliary belt position sensor 175 which measures the position of the auxiliary belt 172 with respect to the longitudinal direction of the auxiliary belt roller 173a. Based on the result of the measurement of the auxiliary belt position sensor 175, the operation of controlling the position of the auxiliary belt 172 with respect to the longitudinal direction of the auxiliary belt roller 173a is conducted. Therefore, the position of the auxiliary belt with respect to the longitudinal direction of the auxiliary belt roller can be more precisely and reliably controlled.

Also, in the field emission device 20 according to the embodiment, the auxiliary belt drive unit 171 further includes the tension control device 178 which adjusts the position of the auxiliary belt roller 173c with respect to the direction from the inside of the auxiliary belt 172 towards the outside thereof and thus controls the tension applied to the auxiliary belt 172. Hence, even if comparatively large electrostatic attractive force occurs between the collector 150 and the auxiliary belt 172, because it is possible for the tension of the auxiliary belt 172 to be adjusted to a degree to overcome the electrostatic attractive force, not only can the long sheet W be prevented from being pulled towards the collector 150, but the long sheet W can be smoothly transferred without being impeded.

Moreover, in the field emission device 20 according to the embodiment, the tension control device 178 can adjust the position of the auxiliary belt roller 173c with respect to the direction from the inside of the auxiliary belt 172 towards the outside thereof in such a way that the auxiliary belt roller 173c is moved to a position at which the auxiliary belt 172 can be easily wrapped around the auxiliary belt rollers 173 or can be easily removed therefrom. Therefore, the operation of wrapping the auxiliary belt 172 around the auxiliary belt rollers 173 or removing it therefrom can be facilitated.

Furthermore, in the field emission device 20 according to the embodiment, the width of the auxiliary belt 172 is greater than that of the collector 150 that corresponds to the width of the long sheet W. Thus, the auxiliary belt 172 is reliably disposed between the long sheet W and the collector 150, whereby the long sheet W can be prevented from being pulled towards the collector 150, or the transfer of the long sheet W can be prevented from being impeded.

In addition, according to the field emission device 20 of the embodiment, the opening ratio of the auxiliary belt 172 ranges from 1% to 40%. The reason why the opening ratio of the auxiliary belt 172 ranges from 1% to 40% is due to the fact that, when the opening ratio of the auxiliary belt 172 is 1% or more, the opening ratio can be regarded to be a level that does not greatly influence electro field distribution formed between the collector 150 and the nozzle block 110, and when the opening ratio of the auxiliary belt 172 is 40% or less, it does not greatly reduce the mechanical strength of the auxiliary belt 172.

Further, in the field emission device 20 according to the embodiment, because the auxiliary belt 172 is made of net-shaped substrates which are formed by weaving threads of 0.1 mm to 2.0 mm in diameter, the auxiliary belt 172 has both high mechanical strength and flexibility. Therefore, the auxiliary belt 172 can be smoothly rotated with strong tension applied thereto.

Also, in the field emission device 20 according to the embodiment of the present invention, the auxiliary belt 172 is configured in such a way that net-shaped substrates are stacked on top of one another. As a result, the auxiliary belt 172 has sufficient mechanical strength, thus making it possible to rotate the auxiliary belt 172 with increased tension. More preferably, the net-shaped substrates of the auxiliary belt 172 are made of different kinds of materials. In this case, the mechanical strength and durability of the auxiliary belt 172 can be further enhanced. For instance, a substrate formed on a surface of the auxiliary belt 172 that faces the long sheet W may be made of soft material, and a substrate formed a surface of the auxiliary belt 172 that faces the collector 150 may be made of material having high mechanical strength. The stacked structure of the net-shaped substrates may be a two-, three-, four- or more-layer structure, or it may be a 2.5-layer structure. The term ┌2.5-layer structure┘ refers to a structure such that the thread density of one layer of the two-layer structure is higher than that of the other layer so that the surface planarity and the abrasion resistance of the auxiliary belt can be enhanced without increasing the weight thereof.

Meanwhile, the nanofiber manufacturing device 1 according to the embodiment of the present invention uses the field emission device having the above-mentioned construction. Therefore, even if field emission is conducted in such a way that high voltage is applied to the collector while the nozzle block is grounded, the nanofiber manufacturing device 1 can mass-produce nanofibers having uniform quality with high productivity.

Furthermore, the nanofiber manufacturing device 1 according to the embodiment includes several field emission devices 20 which are arranged in series in a transfer direction A in which the long sheet W is transferred. Therefore, because the several field emission devices are used to manufacture nanofibers, the nanofiber manufacturing device can mass-produce nanofibers with further enhanced productivity.

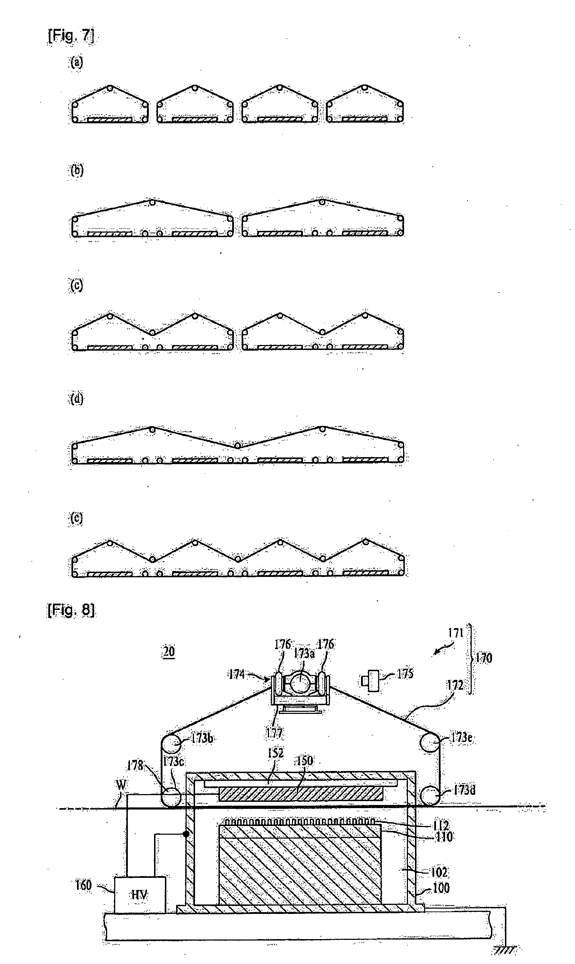

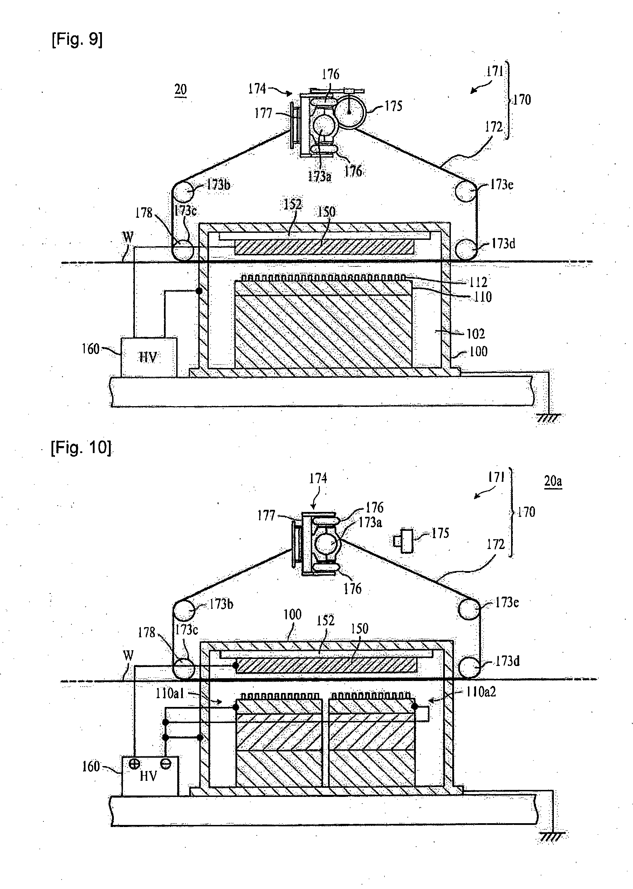

Although the preferred embodiments of the present invention have been disclosed for illustrative purposes, the present invention is not limited to the embodiments. Those skilled in the art will appreciate that various modifications are possible, without departing from the scope of the claims. For instance, the following modifications are also possible.
(1) in the above-mentioned embodiment, although the nanofiber manufacturing device of the present invention has been illustrated as including four field emission devices, the present invention is not limited to this construction. For example, the present invention may be applied to a nanofiber manufacturing device which includes two, three, five or more field emission devices.
(2) in the above-mentioned embodiments, although the nanofiber manufacturing device has been illustrated as including four field emission devices and each field emission device has been illustrated as having a single auxiliary belt device (refer to Fig. 7a), the present invention is not limited to this construction. Fig. 7 illustrates modifications of the auxiliary belt device 170 according to the embodiment of the present invention. As shown in Fig. 7, the nanofiber manufacturing device according to the present invention may be configured such that one or more auxiliary belt devices 170 are provided, and one or each auxiliary belt device 170 includes an auxiliary belt 172 which is wrapped around two or more collectors 150 of the field emission devices 20, and an auxiliary belt drive unit 171 which rotates the auxiliary belt 172 at a speed corresponding to the transfer speed of the long sheet W. In this case, the number of the auxiliary belt drive units 171 can be reduced. For example, in the nanofiber manufacturing device that is provided with four field emission devices 20, a single auxiliary belt device 170 may be installed for every two field emission devices (refer to Figs. 7b or 7c), or a single auxiliary belt device 170 may be installed for all of the four field emission devices 20 (refer to Figs. 7d or 7e).
(3) in the above-mentioned embodiment, each field emission device of the nanofiber manufacturing device of the present invention has been illustrated as being a bottom-up type field emission device provided with upward nozzles, the present invention is not limited to this. For instance, the present invention may be applied to a nanofiber manufacturing device which includes a top-down type field emission device provided with downward nozzles or a side type field emission device provided with side nozzles.
(4) in the above-mentioned embodiment, the field emission device of the nanofiber manufacturing device has been illustrated as being configured such that the positive electrode of the power supply 160 is connected to the collector 150 while the negative electrode of the power supply 160 is connected to the nozzle block 110 and the casing 100, the present invention is not limited to this. For example, the present invention may be applied to a nanofiber manufacturing device which includes a field emission device that is configured such that the negative electrode of the power supply is connected to the collector 150 while the positive electrode of the power supply is connected to the nozzle block 110 and the casing 100.
(5) in the above-mentioned embodiment, although the two air spring have been illustrated as being disposed on opposite upper and lower sides of the support, the present invention is not limited to this construction. Fig. 8 is a view showing a modification of the auxiliary belt position control device. For example, as shown in Fig. 8, two air springs 176 may be configured such that they are disposed on opposite left and right sides of the support shaft. In this case, the position of the auxiliary belt 172 with respect to the longitudinal direction of the auxiliary belt roller 173a can be controlled by horizontally moving the end of the auxiliary belt roller 173a.
(6) in the above-mentioned embodiment, the camera is used as the position sensor, but the present invent is not limited to this. Fig. 9 illustrates a modification of the auxiliary belt position sensor. As shown in Fig. 9, for example, a disk-shaped position measurement sensor may be used as the position sensor. Also, a typical laser distance measurement device or other typical position measurement sensors may be used as the position sensor.
(7) in the above-mentioned embodiment, although the nanofiber manufacturing device of the present invention has been illustrated as being configured such that a single nozzle block is installed in each field emission device, the present invention is not limited to this construction. Fig. 10 is a front view illustrating a critical portion of a field emission device 20a. As shown in Fig. 10, two nozzle blocks 110a1 and 110a2 may be installed in each field emission device 20a. In addition, the present invention may be applied to a nanofiber manufacturing device in which two or more nozzle blocks are provided in each field emission device.
   In this case, all of the nozzle blocks may have the same nozzle arrangement interval. Alternatively, the nozzle blocks may be configured such that the nozzle arrangement intervals thereof differ from each other. Furthermore, all of the nozzle blocks may have the same height or, alternatively, the heights of the nozzle blocks may differ from each other.
(8) the nanofiber manufacturing device of the present invention may further include a reciprocating unit which reciprocates the nozzle block at a predetermined period in the transverse direction of the long sheet. In the case where the field emission operation is performed while the nozzle block is reciprocated at a predetermined period by the reciprocating unit, the amount of cumulative nanofibers deposited on the long sheet can be uniform with respect to the transverse direction of the long sheet. In this case, preferably, each field emission device or each nozzle block is independently controlled with regard to the period or distance of the reciprocating motion of the nozzle block. Therefore, all of the nozzle blocks may be configured to be reciprocated on the same cycle. The nozzle blocks may be reciprocated on different cycles. Furthermore, all of the nozzle blocks may be configured such that the distances of the reciprocating motion of the nozzle blocks are the same as each other. Alternatively, the distances of the reciprocating motion of the nozzle blocks may be different from each other.

## Claims

1. A field emission device, comprising:
a collector;
a nozzle block disposed facing the collector, the nozzle block being provided with a plurality of nozzles discharging a polymer solution; and
a power supply applying high voltage between the collector and the nozzle block, wherein one of a positive electrode and a negative electrode of the power supply is connected to the collector, while a remaining one of the positive electrode and the negative electrode of the power supply is connected to the nozzle block and a potential of the remaining one drops to a ground potential,
the field emission device forming, through field emission, nanofibers on a long sheet that is being transferred at a predetermined transfer speed, the field emission device further comprising
an auxiliary belt device, comprising: an auxiliary belt comprising an insulating and porous endless belt rotatably provided in such a way as to encircle the collector; and an auxiliary belt drive unit rotating the auxiliary belt at the transfer speed of the long sheet.

2. The field emission device according to claim 1, wherein the auxiliary belt drive unit comprises a plurality of auxiliary belt rollers around which the auxiliary belt is wrapped so that the auxiliary belt is rotated by the auxiliary belt rollers, and a drive motor rotating at least one of the auxiliary belt rollers.

3. The field emission device according to claim 2, wherein the auxiliary belt drive unit further comprises
an auxiliary belt position control device controlling a position of an end of one of auxiliary belt rollers with respect to with respect to a direction from an inside of the auxiliary belt towards an outside thereof, thus controlling a position of the auxiliary belt with respect to a longitudinal direction of the auxiliary belt roller.

4. The field emission device according to claim 3, wherein the auxiliary belt position control device comprises: a pair of air springs disposed on opposite sides of a support shaft, the support shaft rotatably supporting the end of the auxiliary belt roller; and an expansion-rate control unit independently controlling expansion rates of the air springs.

5. The field emission device according to claim 3 or 4, wherein the auxiliary belt drive unit further comprises an auxiliary belt position sensor measuring the position of the auxiliary belt with respect to the longitudinal direction of the auxiliary belt roller and controls the position of the auxiliary belt with respect to the longitudinal direction of the auxiliary belt roller based on a result of measurement of the auxiliary belt position sensor.

6. The field emission device according to any one of claims 2 through 5, wherein the auxiliary belt drive unit further comprises a tension control device controlling a position of at least one of the auxiliary belt rollers with respect to the direction from the inside of the auxiliary belt towards the outside thereof, thus controlling tension applied to the auxiliary belt.

7. The field emission device according to claim 6, wherein the tension control device controls a position of the auxiliary belt roller with respect to the direction from the inside of the auxiliary belt towards the outside thereof in such a way that the auxiliary belt roller is moved to a position at which the auxiliary belt can be easily wrapped around the auxiliary belt rollers or can be easily removed therefrom.

8. The field emission device according to any one of claims 1 through 7, wherein a width of the auxiliary belt is greater than a width of the collector that corresponds to a width of the long sheet.

9. The field emission device according to any one of claims 1 through 8, wherein the auxiliary belt comprises a net-shaped substrate formed by weaving threads having diameters ranging from 0.1 mm to 2.0 mm.

10. The field emission device according to claim 9, wherein the net-shaped substrate comprises a plurality of net-shaped substrates, and the auxiliary belt is configured such that the net-shaped substrates are stacked on top of one another.

11. A nanofiber manufacturing device, comprising:
a transfer device transferring a long sheet at a predetermined transfer speed; and
a field emission device depositing nanofibers on the long sheet that is being transferred by the transfer device, wherein the field emission device comprises the field emission device according to any one of claims 1 through 10.

12. The field emission device according to claim 11, wherein the field emission device comprises a plurality of field emission devices arranged in series in a direction in which the long sheet is transferred.

13. The field emission device according to claim 12, wherein the auxiliary belt device comprises: one or a plurality of auxiliary belts provided in such a way as to encircle the collectors of two through all of the field emission devices; and an auxiliary belt drive unit rotating the one or the plurality of auxiliary belts at a speed corresponding to the transfer speed of the long sheet.

## Patentansprüche

1. Ein Feldemissionsgerät, umfassend:
einen Kollektor;
einen vor dem Kollektor angeordneten Düsenblock, wobei der Düsenblock mit einer Vielzahl von Düsen versehen ist, welche eine Polymerlösung abgeben; und
ein Netzteil welches eine hohe Spannung zwischen dem Kollektor und dem Düsenblock anlegt, wobei eine der positiven Elektroden und eine negative Elektrode des Netzteils mit dem Kollektor verbunden sind, während eine verbleibende positive Elektrode und die negative Elektrode des Netzteils mit dem Düsenblock und ein Potential der verbleibenden zum Ground Potential abfällt,
wobei das Feldemissionsgerät, durch Feldemission, auf einer langen Platte, die mit einer vorher festgelegten Transfergeschwindigkeit bewegt wird, Nanofasern bildet, das Feldemissionsgerät weiter umfassend
eine unterstützende Transportband-Vorrichtung, umfassend: ein unterstützendes Transportband umfassend ein isolierendes und poröses endloses Band welches in der Weise drehbar angebracht ist so dass es den Kollektor umgibt; und ein unterstützende Transportband Einheit welches das unterstützende Transportband mit der Transfergeschwindigkeit der langen Platte dreht.

2. Ein Feldemissionsgerät gemäß Anspruch 1, wobei die unterstützende Transportband Einheit eine Vielzahl von unterstützenden Transportband Rollen umfasst um die das unterstützende Transportband gewickelt ist, so dass das unterstützende Transportband durch die unterstützenden Transportband Rollen gedreht wird, sowie einen Antriebsmotor der mindestens eine der unterstützenden Transportband Rollen dreht.

3. Ein Feldemissionsgerät gemäß Anspruch 2, wobei die unterstützende Transportband Einheit weiter umfasst
Einen unterstützenden Transportband-Positionsregler, der die Position eines Endes eines der unterstützenden Transportband Rollen kontrolliert bezüglich der Richtung von einer Innenseite des unterstützenden Transportbands hin zu einer Außenseite desselben, und somit die Position des unterstützenden Transportbands bezüglich einer Längsrichtung der unterstützenden Transportband Rolle kontrolliert.

4. Ein Feldemissionsgerät gemäß Anspruch 3 wobei der unterstützenden Transportband-Positionsregler umfasst: ein Paar von Luftfedern die auf entgegengesetzten Seiten einer Trägerwelle angeordnet sind, wobei die Trägerwelle drehbar das Ende der unterstützenden Transportband Rolle lagert; und eine Expansionssteuerungs-Einheit die unabhängig die Expansionsraten der Luftfedern kontrolliert.

5. Ein Feldemissionsgerät gemäß Anspruch 3 oder 4, wobei die unterstützende Transportband Einheit weiter umfasst, einen unterstützenden Transportband Positionssensor, der die Position des unterstützenden Transportbands bezüglich der Längsrichtung der unterstützenden Transportband Rolle misst und die Position des unterstützenden Transportbands bezüglich der Längsrichtung der unterstützenden Transportband Rolle auf Grundlage des Ergebnisses einer Messung des unterstützenden Transportband Positionssensors kontrolliert.

6. Ein Feldemissionsgerät gemäß einem der Ansprüche 2 bis 5, wobei die unterstützende Transportband Einheit weiter umfasst, ein Spannungsregelungs Gerät, das die Position zumindest einer der unterstützenden Transportband Rollen kontrolliert bezüglich der Richtung von der Innenseite des unterstützenden Transportbands hin zu dessen Außenseite, und somit die Spannung kontrolliert, mit der das unterstützende Transportband beaufschlagt wird.

7. Ein Feldemissionsgerät gemäß Anspruch 6, wobei das Spannungsregelungs Gerät eine Position der unterstützenden Transportband Rolle kontrolliert bezüglich der Richtung von der Innenseite des unterstützenden Transportbands hin zu dessen Außenseite in der Weise, dass die unterstützende Transportband Rolle zu einer Position bewegt wird an der das unterstützende Transportband einfach um die unterstutzende Transportband Rolle gewickelt werden kann oder einfach von dieser entfernt werden kann.

8. Ein Feldemissionsgerät gemäß einem der Ansprüche 1 bis 7, wobei die Breite des unterstützenden Transportbandes größer ist als die Breite des Kollektors die der Breite der langen Platte.

9. Ein Feldemissionsgerät gemäß einem der Ansprüche 1 bis 8, wobei das unterstützende Transportband ein netzförmiges Substrat umfasst, das durch Webfäden mit Durchmessern zwischen 0.1 mm bis 2.0 mm gebildet wird.

10. Ein Feldemissionsgerät gemäß Anspruch 9, wobei das netzförmige Substrat eine Vielzahl von netzförmigen Substraten umfasst, und das unterstützende Transportband in der Weise angeordnet ist, dass die netzförmigen Substrate übereinander gestapelt sind.

11. Eine Vorrichtung zur Herstellung von Nanofasern, umfassend:
Eine Transfereinheit um eine lange Platte mit einer vorbestimmten Geschwindigkeit zu transferieren; und
Ein Feldemissionsgerät zum Ablagern von Nanofasern auf der langen Platte die von der Transfereinheit transferiert wird, wobei das Feldemissionsgerät ein Feldemissionsgerät nach einem der Ansprüche 1 bis 10 umfasst.

12. Ein Feldemissionsgerät nach Anspruch 11, wobei das Feldemissionsgerät eine Vielzahl von Feldemissionsgeräten umfasst, die in der Transfer-Richtung der langen Platte in Serie angeordnet sind.

13. Ein Feldemissionsgerät nach Anspruch 12, wobei die unterstützende Transportband-Vorrichtung umfasst: Ein oder eine Vielzahl von unterstützenden Transportbändern die so angeordnet sind, dass die Kollektoren von zweien bis von allen der Feldemissionsgeräte umgeben sind; und eine unterstützende Transportband-Vorrichtung die eine oder die Vielzahl von unterstützenden Transportbändern mit einer Geschwindigkeit rotieren, die der Transfergeschwindigkeit der langen Platte entspricht.

## Revendications

1. Dispositif d'émission par effet de champ comprenant :
un collecteur ;
un bloc de buses disposé pour faire face au collecteur, le bloc de buses étant pourvu d'une pluralité de buses évacuant une solution polymère ; et
une alimentation électrique appliquant une haute tension entre le collecteur et le bloc de buses, dans lequel une électrode parmi une électrode positive et
une électrode négative de l'alimentation électrique est connectée au collecteur tandis qu'une électrode restante parmi l'électrode positive et l'électrode négative de l'alimentation électrique est connectée au bloc de buses, et un potentiel de l'électrode restante chute à un potentiel de terre,
le dispositif d'émission par effet de champ formant,
par l'émission par effet de champ, des nanofibres sur une feuille longue qui est en train d'être transférée à une vitesse de transfert prédéterminée, le dispositif d'émission par effet de champ comprenant en outre
un dispositif de courroie auxiliaire comprenant : une courroie auxiliaire comprenant une courroie sans fin isolante et poreuse prévue à rotation de manière à encercler le collecteur ; et un module d'entraînement de courroie auxiliaire faisant tourner la courroie auxiliaire à la vitesse de transfert de la feuille longue.

2. Dispositif d'émission par effet de champ selon la revendication 1, dans lequel le module d'entraînement de courroie auxiliaire comprend une pluralité de rouleaux de courroie auxiliaire autour desquels la courroie auxiliaire est enroulée de sorte que la courroie auxiliaire est tournée par les rouleaux de courroie auxiliaire, et un moteur d'entraînement faisant tourner au moins un des rouleaux de courroie auxiliaire.

3. Dispositif d'émission par effet de champ selon la revendication 2, dans lequel le module d'entraînement de courroie auxiliaire comprend en outre un dispositif de commande de position de courroie auxiliaire commandant une position d'une extrémité d'un de rouleaux de courroie auxiliaire par rapport à une direction d'un intérieur de la courroie auxiliaire vers un extérieur de celle-ci, commandant ainsi une position de la courroie auxiliaire par rapport à une direction longitudinale du rouleau de courroie auxiliaire.

4. Dispositif d'émission par effet de champ selon la revendication 3, dans lequel le dispositif de commande de position de courroie auxiliaire comprend : une paire de ressorts pneumatiques disposés sur des côtés opposés d'un arbre de support, l'arbre de support supportant à rotation l'extrémité du rouleau de courroie auxiliaire ; et un module de commande de taux de détente commandant indépendamment des taux de détente des ressorts pneumatiques.

5. Dispositif d'émission par effet de champ selon la revendication 3 ou 4, dans lequel le module d'entraînement de courroie auxiliaire comprend en outre un capteur de position de courroie auxiliaire mesurant la position de la courroie auxiliaire par rapport à la direction longitudinale du rouleau de courroie auxiliaire et commande la position de la courroie auxiliaire par rapport à la direction longitudinale du rouleau de courroie auxiliaire en fonction d'un résultat de mesure du capteur de position de courroie auxiliaire.

6. Dispositif d'émission par effet de champ selon l'une quelconque des revendications 2 à 5, dans lequel le module d'entraînement de courroie auxiliaire comprend en outre un dispositif de commande de tension commandant une position d'au moins un des rouleaux de courroie auxiliaire par rapport à la direction de l'intérieur de la courroie auxiliaire vers l'extérieur de celle-ci, commandant ainsi une tension appliquée à la courroie auxiliaire.

7. Dispositif d'émission par effet de champ selon la revendication 6, dans lequel le dispositif de commande de tension commande une position du rouleau de courroie auxiliaire par rapport à la direction de l'intérieur de la courroie auxiliaire vers l'extérieur de celle-ci de telle sorte que le rouleau de courroie auxiliaire est déplacé vers une position à laquelle la courroie auxiliaire peut être aisément enroulée autour des rouleaux de courroie auxiliaire ou peut être aisément retirée de ceux-ci.

8. Dispositif d'émission par effet de champ selon l'une quelconque des revendications 1 à 7, dans lequel une largeur de la courroie auxiliaire est supérieure à une largeur du collecteur qui correspond à une largeur de la feuille longue.

9. Dispositif d'émission par effet de champ selon l'une quelconque des revendications 1 à 8, dans lequel la courroie auxiliaire comprend un substrat en forme de filet formé en tressant des fils ayant des diamètres allant de 0,1 mm à 2,0 mm.

10. Dispositif d'émission par effet de champ selon la revendication 9, dans lequel le substrat en forme de filet comprend une pluralité de substrats en forme de filet et la courroie auxiliaire est configurée de sorte que les substrats en forme de filet sont empilés les uns sur les autres.

11. Dispositif de fabrication de nanofibres comprenant :
un dispositif de transfert transférant une feuille longue à une vitesse de transfert prédéterminée ; et
un dispositif d'émission par effet de champ déposant des nanofibres sur la feuille longue qui est en train d'être transférée par le dispositif de transfert, dans lequel le dispositif d'émission par effet de champ comprend le dispositif d'émission par effet de champ selon l'une quelconque des revendications 1 à 10.

12. Dispositif d'émission par effet de champ selon la revendication 11, dans lequel le dispositif d'émission par effet de champ comprend une pluralité de dispositifs d'émission par effet de champ agencés en série dans une direction dans laquelle la feuille longue est transférée.

13. Dispositif d'émission par effet de champ selon la revendication 12, dans lequel le dispositif de courroie auxiliaire comprend : une ou une pluralité de courroies auxiliaires prévues de manière à encercler les collecteurs de deux à l'ensemble des dispositifs d'émission par effet de champ ; et un module d'entraînement de courroie auxiliaire faisant tourner la ou la pluralité de courroies auxiliaire à une vitesse correspondant à la vitesse de transfert de la feuille longue.
